# EUROPEAN PATENT SPECIFICATION

(11) **EP 2 375 071 B1**
(45) Date of publication and mention of the grant of the patent: **27.03.2019**
(21) Application number: 10175179.0
(22) Date of filing: 03.09.2010
(51) Int. Cl.: F04B 19/00, F04B 43/04

(54) **MICROFLUIDIC CHIP DEVICE AND METHOD OF MAKING THE SAME**
MIKROFLUIDISCHE CHIPVORRICHTUNG UND HERSTELLUNGSVERFAHREN DAFÜR
DISPOSITIF À PUCE MICROFLUIDIQUE ET SON PROCÉDÉ DE FABRICATION

(30) Priority: 08.04.2010 TW 099110881
(43) Date of publication of application: 12.10.2011
(73) Proprietor: National Tsing Hua University, Hsinchu 30013 (TW)
(72) Inventor: Hong, Chien-Chong, 30274 ZHUBEI CITY (TW); Chen, Jui-Chun, 11050, TAIPEI CITY (TW)
(74) Representative: Regimbeau

(56) References cited:
- EP-A1- 1 690 595
- WO-A1-2006/087655
- WO-A2-2004/076859
- WO-A2-2006/065884
- WO-A2-2008/018036
- US-A1- 2002 047 003

## Description

This application claims priority of Taiwanese application no. 099110881, filed on April 8, 2010.

This invention relates to a microfluidic chip device and a method of making the same, more particularly to a microfluidic chip device made using a shape memory polymer and a method of making the same.

A conventional microfluidic device includes a micropump that is able to transport a fluid and control the same, and a microvalve that is capable of regulating a flow direction and a flow rate of the fluid in a channel of the microfluidic device. The micropump generally falls into one of two categories: a displacement pump and a dynamic pump. The displacement pump can be further classified as a peristaltic type or a reciprocating type. The microvalve may be active or passive, and may include a mechanical moving part or a non-mechanical moving part.

M. Koch et al. proposed a microfluidic system including a reciprocating micropump based on a piezoelectric material (M. Koch, N. Harris, Alan G. R. Evans, Neil M. White and Arthur Brunnschweiler, A Novel Micromachined Pump Based On Thick-Film Piezoelectric Actuation, Sensors and Actuators A: Physical, vol. 70, pp. 98-103, 1998). Specifically, the piezoelectric material is disposed on a unit of three silicon layers that are stacked together. A cantilever beam structure capable of vibrating is used to induce a unidirectional flow of a fluid. When voltage is applied, the piezoelectric material and a membrane reciprocate, thereby being able to transport the fluid.

Zengerle et al. proposed a microfluidic system that includes an electrostatic micropump made from a silicon material (Optoelectronics and Photonics: Principles and Practices. 1st ed., Prentice Hall, 2001). The electrostatic micropump employs a cantilever beam structure as a flap valve.

Compared to the structures of the aforementioned conventional microfluidic systems, a microfluific system made from a polymer can be easily produced, is more biologically compatible, and can be made using a process that does not have limitations of a semiconductor manufacturing process. Consequently, polymeric materials, which are able to partially integrate a microvalve and a microfluidic driving source, have been continuously developed.

R. Liu et al. used an acrylic acid-hydroxyethyl methacrylate (AA/HEMA) hydrogel subjected to an ultraviolet curing process to construct a microvalve (Liu R, Yu Q and Beebe D J, "Fabrication and Characterization of Hydrogel-Based Microvalves"J.Microelectromech.Syst., vol. 11, pp. 45-53, 2002) . The hydrogel changes in volume at different pH. Therefore, by virtue of volume changes of the hydrogel in buffer solutions having different pH values, a polydimethylsiloxane (PDMS) membrane can be pushed. David T. Eddington et al. utilized an array of pH-responsive hydrogels and a PDMS membrane to produce a microfluidic device (David T. Eddington and David J. Beebe, "A Valved Responsive Hydrogel Microdispensing Device With Integrated Pressure Source", Journal of Microelectro-mechanical Systems, vol. 13, no. 4, 2004). In the aforesaid two literatures, an external syringe pump is required to inject a buffer solution.

However, the aforementioned conventional partially integrated microfluidic systems require a pressure controlling device and pipes to serve as a driving source for the fluid. Even though a microfluidic chip has a small size, an external driving source having a large size is necessary for the aforementioned conventional partially integrated microfluidic systems. Accordingly, the aforementioned conventional partially integrated microfluidic systems are not convenient to use.

C. C. Hong et al. sealed a pressurized gas in a microcavity with a thermoplastic membrane, utilized electroplated nickel as a heater material, and packaged the aforementioned elements and a microfluidic chip together (J. Micromech. Microeng. 17 (2007) 410-417). When the sealing membrane is heated and melted by the heater, the pressurized gas in the microcavity is released and serves as a driving source to push a fluid to flow into the microfluidic chip.

Kuo-Yao Weng et al, encapsulated vacuum capillaries in a flexible and elastic film (The Royal Society of Chemistry 2008, Lab Chip, 2008, 8, 1216-1219). When the vacuum capillaries in the film are broken by an external force, pneumatic forces are generated to suck a fluid into a microfluidic system. A vacuum capillary pneumatic pump serves as a driving source.

Nevertheless, a driving source, which can induce actuation of a fluid by creating a positive pressure or a negative pressure, is generally made via a complicated process, must be precisely controlled to successfully accomplish the actuation of the fluid, and is normally not reusable. Thus, how to provide a simple method of integrating a microfluidic system and a driving source is the subject of endeavor in the present invention.

EP 1 690 595 A1 concerns a sample chamber array and method for processing a biological sample.

The object of the present invention is to provide a microfluidic chip device that can overcome the aforesaid drawbacks of the prior art, and a method of making the same.

According to one aspect of this invention, a method of making according to claim 1 is provided.

According to another aspect of this invention, a microfluidic chip device according to claim 6 is provided.

Other features and advantages of the present invention will become apparent in the following detailed description of the preferred embodiments of this invention, with reference to the accompanying drawings, in which:
FIG. 1 is a schematic diagram showing the preferred embodiment of a method of making a microfluidic chip device according to the present invention;
FIG. 2 is a schematic perspective view to illustrate the preferred embodiment of a microfluidic chip device according to the present invention; and
FIG. 3 shows change of a transformative portion of the preferred embodiment shown in FIG. 2 from a temporary shape to a memory shape for driving a fluid.

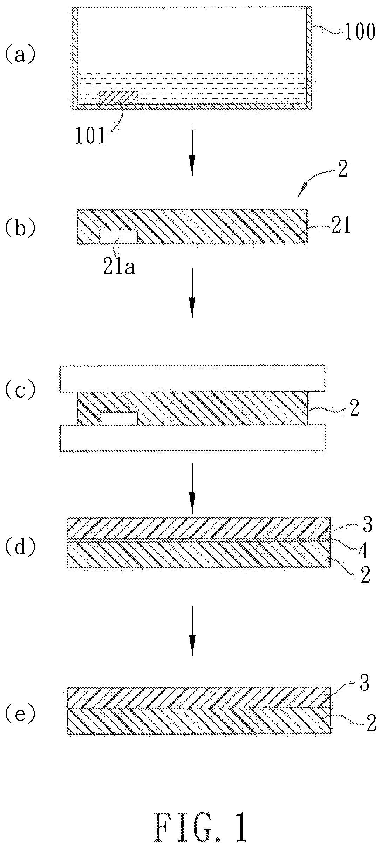

FIG. 1 shows the preferred embodiment of a method of making a microfluidic chip device according to the present invention.

As shown in step (a) of FIG. 1, a monomer composition, which contains a monomer that can be polymerized to form a shape memory polymer (SMP), is disposed in a mold 100 having a predetermined pattern. Specifically, the predetermined pattern of the mold 100 is composed of a protrusion 101 of the mold 100, which extends upwardly from a bottom portion of the mold 100. The monomer composition in the mold 100 is subjected to polymerization so as to form the SMP, The SMP is molded into a substrate layer 2 having a transformative portion 21 with a memory shape by virtue of the mold 100. The memory shape of the transformative portion 21 corresponds to the pattern of the mold 100. In this embodiment, the monomer composition is disposed in the mold 100 by a casting process. Since the mold 100 has the protrusion 101, the transformative portion 21 with the memory shape has an indentation 21a corresponding to the protrusion 101 of the mold 100, The memory shape of the transformative portion 21 is a permanent shape.

The SMP produced from the monomer composition may fall into one of the following four categories: a SMP composed of a covalently cross-linked glassy thermoset network, a SMP composed of a covalently cross-linked semi-crystalline network, a SMP composed of a physically cross-linked glassy copolymer, and a SMP composed of a physically cross-linked semi-crystalline block copolymer, Since the SMP composed of the covalently cross-linked glassy thermoset network has a sharp glass transition temperature (T_{g}) curve and has a structure of a cross-linked network, the same is able to repress molecular motion between chains. Accordingly, the SMP composed of the covalently cross-linked glassy thermoset network is capable of accomplishing shape-fixing and rapid shape-recovery, and is preferably used in the method of the present invention. In this embodiment, the monomer in the monomer composition is selected from the group consisting of methyl methacrylate (MMA) and butyl metharylate (BMA).

The monomer composition may further contain polyhedral oligosilsesquioxane (POSS) that is an inorganic/organic hybrid molecule, and that contains both an inorganic silicon-oxygen cage and compatibilizing organic groups pendant to each silicon corner of the cage. Thermal stability and melt flowability of the SMP can be increased by virtue of POSS, and a mechanical property of the SMP is not adversely affected by POSS.

As shown in steps (b) and (c) of FIG. 1, the substrate layer 2 is removed from the mold 100, and the transformative portion 21 is subsequently hot-pressed so that the transformative portion 21 is deformed and is hence changed from the memory shape to a temporary shape. Specifically, the indentation 21a of the transformative portion 21 disappears when the transformative portion 21 is changed into the temporary shape after the hot pressing step. The transformative portion 21 with the temporary shape, which has no indentation 21a, is then cooled down. In this embodiment, the substrate layer 2 having the transformative portion 21 with the memory shape is heated to a temperature higher than T_{g} of the substrate layer 2, and the transformative portion 21 is hot-pressed by a hot-embossing machine. When the transformative portion 21 with the temporary shape is cooled down to a temperature lower than T_{g} thereof, internal energy is stored, and kinetic energy of molecules is reduced. Thus, the transformative portion 21 can maintain the temporary shape thereof.

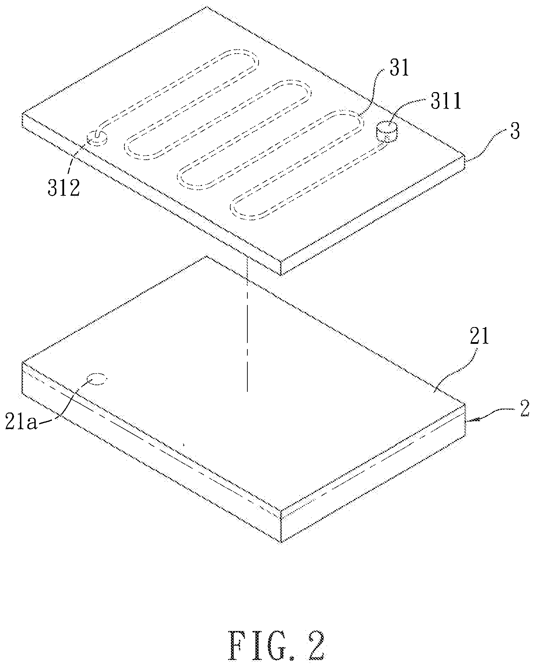

Referring to FIGS. 1 and 2, a microfluidic layer 3 having a microchannel 31 is laminated with the substrate layer 2 so that the microchannel 31 is connected fluidly to the transformative portion 21 having the temporary shape. Consequently, the preferred embodiment of a microfluidic chip device according to the present invention is formed. The microfluidic layer 3 further has a first hole 311 that is formed on a first surface of the microfluidic layer 3 and that is in spatial communication with the microchannel 31, and a second hole 312 that is formed on a second surface of the microfluidic layer 3 opposite to the first surface, that is in spatial communication with the microchannel 31, and that may be in spatial communication with the indentation 21a of the transformative portion 21. Namely, the microchannel 31 may be in spatial communication with the indentation 21a of the transformative portion 21. The microfluidic layer 3 may be made from glass or a polymer, and may be bonded to the substrate layer 2 by virtue of an adhesive 4.

In this embodiment, the microfluidic layer 3 is made by drilling a substrate made from a cyclic olefin copolymer (COC). Accordingly, the microchannel 31, and the first and second holes 311, 312 are formed. A UV curable adhesive 4 is spin-coated onto the second surface of the microfluidic layer 3, which has the second hole 312. The microfluidic layer 3 is disposed on the substrate layer 2 with the second surface thereof facing the transformative portion 21, and with the second hole 312 disposed at a location of the transformative portion 21 with the temporary shape, which corresponds in position to the indentation 21a of the transformative portion 21 with the memory shape. The assembly of the microfluidic layer 3 and the substrate layer 2 is placed in a UV exposure box and is exposed to UV light such that the microfluidic layer 3 and the transformative portion 21 are bonded to each other (see step (d) of FIG. 1).

The memory shape of the transformative portion 21 is recovered when the transformative portion 21 is activated by an external stimulus, and a fluid driving pressure is produced within the microchannel 31 when the memory shape is recovered. Specifically, when the transformative portion 21 is activated by the external stimulus and hence changes from the temporary shape to the memory shape, a volume of the transformative portion 21 (i.e., a volume of the SMP) changes such that the fluid driving pressure is produced within the microchannel 31. Namely, a pressure change is induced by the volume change of the transformative portion 21.

When a SMP has a low POSS content, thermal stability and melt flowablility of the SMP are low. Accordingly, the memory shape of the transformative portion 21 made from the SMP having the low POSS content may deform before the hot-pressing process such that the volume change of the transformative portion 21 between the temporary shape and the memory shape may be insufficient. Hence, the fluid driving pressure (or the pressure change) produced by the insufficient volume change of the transformative portion 21 may be deficient. Preferably, an amount of POSS is not less than 10 wt% based on a total weight of the monomer composition. More preferably, the amount of POSS is not less than 15 wt% based on the total weight of the monomer composition.

In this embodiment, the external stimulus is heat, and the fluid driving pressure is a negative pressure that is produced in the microchannel 31 when the indentation 21a of the transformative portion 21 is recovered. It should be noted that the transformative portion 21 could be designed to produce a positive pressure in the microchannel 31 in other embodiments.

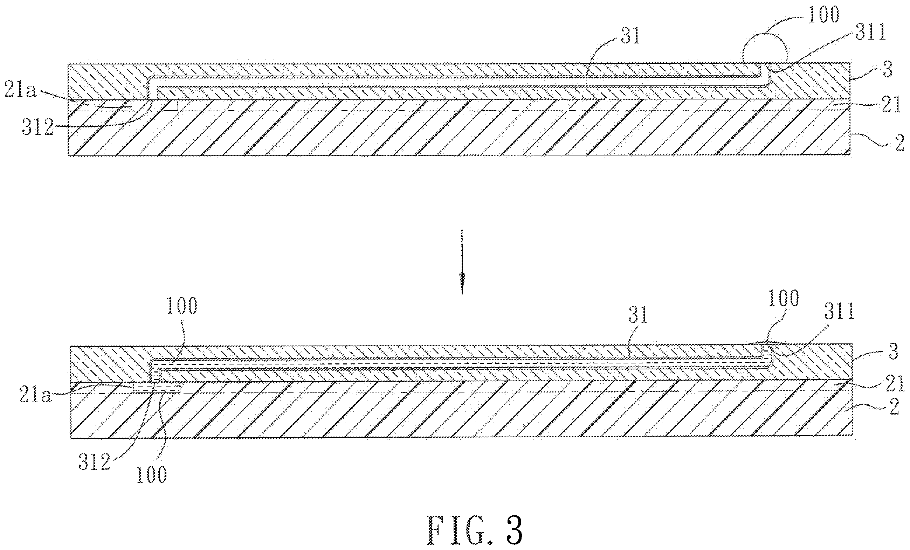

Referring to FIG. 3, how the microfluidic chip device can drive a fluid 100 is illustrated as follows. The fluid 100 is disposed on the first hole 311. When the transformative portion 21 is heated to a temperature higher than T_{g} thereof, the internal energy is released to change the transformative portion 21 from the temporary shape to the memory shape, thereby recovering the indentation 21a. Thus, the volume change of the transformative portion 21 produces the negative pressure in the microchannel 31. As a result, the fluid 100 is sucked into the microchannel 31 by the negative pressure. Accordingly, a driving source (i.e., the transformative portion 21) and a microfluidic chip (i.e., the microfluidic layer 3) can be integrated by virtue of the method of this invention.

It should be noted that the microfluidic layer 3 and the transformative portion 21 could be detachably connected to each other in other embodiments . Consequently, the substrate layer 2 having the transformative portion 21 with the memory shape may be detached from the microfluidic layer 3, and may be subjected to a hot-pressing process so as to change the transformative portion 21 from the memory shape to the temporary shape. As a result, the substrate layer 2 may be attached to a new microfluidic layer 3 and is considered reusable.

The method of this invention is simple and convenient, and can be easily conducted. A production cost of the microfluidic chip device of this invention is also low.

## Claims

1. A method of making a microfluidic chip device, comprising
forming a shape memory polymer into a substrate layer (2) having a transformative portion (21) withamemory shape, wherein the transformative portion (21) with the memory shape has a surface of the substrate layer (2), which as an indentation (21a);
processing the substrate layer (2) to change the transformative portion (21) into a temporary shape,; and
laminating the substrate layer (2) with a microfluidic layer (3) that has a first hole (311) that is formed on a first surface of the microfluidic layer (3), and a second hole (312) that is formed on a second surface of the microfluidic layer (3) opposite to the first surface, wherein the second hole (312) is in spatial communication with the indentation (21a) when the transformative portion (21) is in the memory shape,
wherein the memory shape is recovered when the transformative portion (21) is activated by an external stimulus, and a fluid driving pressure is produced within the microchannel (31) when the memory shape is recovered,
the method being **characterized in that**:
the substrate layer (2) is processed by hot pressing the surface of the substrate layer (2) so that the indentation (21a) disappears from the surface of the substrate layer(2),
the microfluidic layer (3) further has a microchannel (31),
the first hole (311) is in spatial communication with the microchannel (31), and
the second hole (312) is in spatial communication with the microchannel (31).

2. The method of Claim 1, **characterized in that** the hot-pressing is conducted at a temperature not lower than a glass transition temperature of the substrate layer (2) .

3. The method of Claim 1, **characterized in that** the external stimulus to activate the transformative portion (21) includes heat.

4. The method of Claim 1, **characterized in that** the shape memory polymer is made from a monomer composition containing a monomer selected from the group consisting of methyl methacrylate and butyl methacrylate.

5. The method of Claim 4, **characterized in that** the monomer composition further contains polyhedral oligosilsesquioxane.

6. A microfluidic chip device comprising
a substrate layer (2) made from a shape memory polymer, and including a transformative portion (21) that can change in volume when changing in shape between a memory shape and a temporary shape, said transformative portion (21) with said memory shape has a surface of said substrate layer (2), which as an indentation (21a); and
a microfluidic layer (3) laminated with said substrate layer (2) and having a first hole (311) that is formed on a first surface of said microfluidic layer (3), and a second hole (312) that is formed on a second surface of said microfluidic layer (3) opposite to said first surface, wherein said second hole (312) is in spatial communication with said indentation (21a) when said transformative portion (21) is in said memory shape;
wherein said transformative portion (21) produces a fluid driving pressure within said microchannel (31) when said transformative portion (21) changes to said memory shape from said temporary shape,
said microfluidic chip device being **characterized in that**:
said indentation (21a) disappears from said surface when said transformative portion (21) changes from said memory shape to said temporary shape,
said microfluidic layer (3) further has a microchannel (31),
said first hole (311) is in spatial communication with said microchannel (31), and
said second hole (312) is in spatial communication with said microchannel (31).

7. The microfluidic chip device of Claim 6, **characterized in that** said transformative portion (21) changes in shape when being subjected to heat.

## Patentansprüche

1. Verfahren zum Herstellen einer mikrofluidischen Chipvorrichtung, umfassend
Formen eines Formspeicher-Polymers in einer Substratschicht (2) mit einem umformenden Abschnitt (21) mit Speicherform, wobei der umformende Abschnitt (21) mit der Speicherform eine Oberfläche der Substratschicht (2) aufweist, die eine Vertiefung (21a) hat;
Verarbeiten der Substratschicht (2) zum Ändern des umformenden Abschnitts (21) in eine temporäre Form; und
Laminieren der Substratschicht (2) mit einer mikrofluidischen Schicht (3), die ein erstes Loch (311), das auf einer ersten Oberfläche der mikrofluidischen Schicht (3) geformt ist, und ein zweites Loch (312), das auf einer zweiten Oberfläche der mikrofluidischen Schicht (3) gegenüber der ersten Oberfläche geformt ist, aufweist, wobei das zweite Loch (312) in räumlicher Kommunikation mit der Vertiefung (21a) ist, wenn der umformende Abschnitt (21) in der Speicherform ist,
wobei der Formspeicher abgedeckt ist, wenn der umformende Abschnitt (21) durch einen externen Stimulus aktiviert ist und ein Fluid-Antriebsdruck innerhalb des Mikrokanals (31) produziert ist, wenn der Formspeicher abgedeckt ist,
wobei das Verfahren **dadurch gekennzeichnet ist, dass**:
die Substratschicht (2) durch Ausüben von Heißdruck auf die Oberfläche der Substratschicht (2) derart verarbeitet ist, dass die Vertiefung (21a) von der Oberfläche der Substratschicht (2) verschwindet,
die mikrofluidische Schicht (3) weiterhin einen Mikrokanal (31) aufweist,
das erste Loch (311) in räumlicher Kommunikation mit dem Mikrokanal (31) ist, und
das zweite Loch (312) in räumlicher Kommunikation mit dem Mikrokanal (31) ist.

2. Verfahren gemäß Anspruch 1, **dadurch gekennzeichnet, dass** das Ausüben von Heißdruck bei einer Temperatur durchgeführt wird, die nicht niedriger ist als eine Glasübergangstemperatur der Substratschicht (2).

3. Verfahren gemäß Anspruch 1, **dadurch gekennzeichnet, dass** der externe Stimulus zum Aktivieren des umformenden Abschnitts (21) Hitze einschließt.

4. Verfahren gemäß Anspruch 1, **dadurch gekennzeichnet, dass** das Formspeicher-Polymer aus einer Monomer-Zusammensetzung hergestellt ist, die ein Monomer enthält, das aus der Gruppe ausgewählt ist, bestehend aus Methyl-Methacrylat und Butyl-Methacrylat.

5. Verfahren gemäß Anspruch 4, **dadurch gekennzeichnet, dass** die Monomerverbindung weiterhin polyhedrisches Oligosilsexquioaxan enthält.

6. Mikrofluidischer Chip, umfassend:
eine Substratschicht (2), die aus einem Formspeicher-Polymer hergestellt ist und einen umformenden Abschnitt (21) einschließt, der sich im Volumen ändern kann, wenn er seine Form zwischen einer Speicherform und einer vorübergehenden Form ändert, wobei der genannte umformende Abschnitt (21) mit der genannten Speicherform eine Oberfläche der genannten Substratschicht (2) aufweist, welche eine Vertiefung (21a) hat; und
eine mikrofluidische Schicht (3), die mit der genannten Substratschicht (2) laminiert ist und ein erstes Loch (311), das auf einer ersten Oberfläche der genannten mikrofluidischen Schicht (3) geformt ist, und ein zweites Loch (312), das auf einer zweiten Oberfläche der genannten mikrofluidischen Schicht (3) gegenüber der genannten ersten Oberfläche geformt ist, aufweist, wobei das genannte zweite Loch (312) in räumlicher Kommunikation mit der genannten Vertiefung (21a) ist, wenn der genannte umformende Abschnitt (21) in der genannten Speicherform ist;
wobei der genannte umformende Abschnitt (21) einen Fluid-Antriebsdruck innerhalb des genannten Mikrokanals (31) produziert, wenn der genannte umformende Abschnitt (21) von der genannten temporären Form in die genannte Speicherform wechselt,
wobei die genannte mikrofluidische Chipvorrichtung **dadurch gekennzeichnet ist, dass**:
die genannte Vertiefung (21a) von der genannten Oberfläche verschwindet, wenn der genannte umformende Abschnitt (21) von der genannten Speicherform in die genannte temporäre Form wechselt,
die genannte mikrofluidische Schicht (3) weiterhin einen Mikrokanal (31) aufweist,
das genannte erste Loch (311) in räumlicher Kommunikation mit dem genannten Mikrokanal (31) ist und
das genannte zweite Loch (312) in räumlicher Kommunikation mit dem genannten Mikrokanal (31) ist.

7. Mikrofluidische Chipvorrichtung gemäß Anspruch 6, **dadurch gekennzeichnet, dass** der genannte umformende Abschnitt (21) die Form wechselt, wenn er Hitze unterworfen ist.

## Revendications

1. Procédé de fabrication d'un dispositif à puce microfluidique, comprenant
la formation d'un polymère à mémoire de forme dans une couche de substrat (2) comportant une partie de transformation (21) ayant une forme de mémoire, dans lequel la partie de transformation (21) ayant la forme de mémoire comporte une surface de la couche de substrat (2), qui possède une encoche (21a) ;
le traitement de la couche de substrat (2) pour changer la partie de transformation (21) dans une forme temporaire ; et
la stratification de la couche de substrat (2) avec une couche microfluidique (3) qui comporte un premier trou (311) qui est formé sur une première surface de la couche microfluidique (3), et un second trou (312) qui est formé sur une seconde surface de la couche microfluidique (3) à l'opposé de la première surface, dans lequel le second trou (312) est en communication spatiale avec l'encoche (21a) quand la partie de transformation (21) est dans la forme de mémoire,
dans lequel la forme de mémoire est rétablie quand la partie de transformation (21) est activée par un stimulus externe, et une pression d'entraînement de fluide est produite dans le micro-canal (31) quand la forme de mémoire est rétablie,
le procédé étant **caractérisé en ce que** :
la couche de substrat (2) est traitée par le pressage à chaud de la surface de la couche de substrat (2) de telle sorte que l'encoche (21a) disparaisse de la surface de la couche de substrat (2),
la couche microfluidique (3) comporte en outre un micro-canal (31),
le premier trou (311) est en communication spatiale avec le micro-canal (31), et
le second trou (312) est en communication spatiale avec le micro-canal (31).

2. Procédé selon la revendication 1, **caractérisé en ce que** le pressage à chaud est mené à une température non inférieure à une température de transition vitreuse de la couche de substrat (2).

3. Procédé selon la revendication 1, **caractérisé en ce que** le stimulus externe pour activer la partie de transformation (21) inclut de la chaleur.

4. Procédé selon la revendication 1, **caractérisé en ce que** le polymère à mémoire de forme est fabriqué à partir d'une composition monomère contenant un monomère sélectionné à partir du groupe constitué de méthacrylate de méthyle et de méthacrylate de butyle.

5. Procédé selon la revendication 4, **caractérisé en ce que** la composition monomère contient en outre de l'oligosilsesquioxane polyèdre.

6. Dispositif à puce microfluidique comprenant
une couche de substrat (2) fabriquée à partir d'un polymère à mémoire de forme, et incluant une partie de transformation (21) qui peut changer en volume lorsqu'elle change de forme entre une forme de mémoire et une forme temporaire, ladite partie de transformation (21) ayant ladite forme de mémoire comporte une surface de ladite couche de substrat (2), qui comporte une encoche (21a) ; et
une couche microfluidique (3) stratifiée avec ladite couche de substrat (2) et comportant un premier trou (311) qui est formé sur une première surface de ladite couche microfluidique (3), et un second trou (312) qui est formé sur une seconde surface de ladite couche microfluidique (3) à l'opposé de ladite première surface, dans lequel ledit second trou (312) est en communication spatiale avec ladite encoche (21a) quand ladite partie de transformation (21) est dans ladite forme de mémoire ;
dans lequel ladite partie de transformation (21) produit une pression d'entraînement de fluide dans ledit micro-canal (31) quand ladite partie de transformation (21) passe de ladite forme temporaire à ladite forme de mémoire,
ledit dispositif à puce microfluidique étant **caractérisé en ce que** :
ladite encoche (21a) disparaît de ladite surface quand ladite partie de transformation (21) passe de ladite forme de mémoire à ladite forme temporaire,
ladite couche microfluidique (3) comporte en outre un micro-canal (31),
ledit premier trou (311) est en communication spatiale avec ledit micro-canal (31), et
ledit second trou (312) est en communication spatiale avec ledit micro-canal (31).

7. Dispositif à puce microfluidique selon la revendication 6, **caractérisé en ce que** ladite partie de transformation (21) change de forme quand elle est soumise à de la chaleur.
